(19) Europäisches Patentamt

European Patent Office

Office européen des brevets

(11) Publication number: **0 264 157 B1**

(12) **EUROPEAN PATENT SPECIFICATION**

(45) Date of publication of patent specification: **30.09.92**     (51) Int. Cl.⁵: **A01F 25/20**

(21) Application number: **87201975.7**

(22) Date of filing: **14.10.87**

Divisional application 90202027.0 filed on
14/10/87.

(54) **An implement for cutting fodder, such as silage.**

(30) Priority: **16.10.86 NL 8602592**

(43) Date of publication of application:
**20.04.88 Bulletin 88/16**

(45) Publication of the grant of the patent:
**30.09.92 Bulletin 92/40**

(84) Designated Contracting States:
**DE FR GB NL**

(56) References cited:
**EP-A- 0 128 246**
**EP-A- 0 140 433**
**DE-A- 3 312 916**

(73) Proprietor: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**CH-Zug(CH)**

(74) Representative: **Mulder, Herman et al**
**Octrooibureau Van der Lely N.V. Weverskade**
**10 P.O. Box 26**
**NL-3155 ZG Maasland(NL)**

## Description

The invention relates to an implement for cutting fodder, such as silage, comprising a vertical frame along which, at least predominantly horizontally extending, a cutter member is movable in at least predominantly vertical direction, the cutter member including a carrier supporting two first knives each extending rearwardly under an angle of about 90° with the plane defined by the vertical frame, and a second knife extending under an angle of about 90° within a horizontal plane relative to said first knives, which first and second knives by means of driving means are movable in their longitudinal direction relative to said carrier, whereby the drive of the second knife is effected by-passing the first knives, the driving means comprising a first rod, its longitudinal direction extending at least predominantly parallel to the longitudinal direction of said first knives, said rod being coupled to the second knife.

Such an implement is for instance known from the German Offenlegungsschrift DE-A-33 12 916. In this document the second knife of a U-shaped cutter member with three knives is driven through a rod by-passing the first knife while the drive of the first knife comprises a second, shorter rod towards a connection point at the close end of that knife. The rod for the drive of the second knife transfers a moving force from a hydraulic cylinder to the second knife through a movement to and fro around its longitudinal axis by means of levers. Such a construction implies that the force necessary for cutting about one and a half meter of fodder or more is transmistted by torsion of the rod. This means that the rod is very susceptable to metal fatigue unless the rod is of a large diameter or fabricated of a high quality material. These measures are disadvantages in that the thickness of a cutter member used for cutting fodder should be as small as possible, or respectively in that the costs of such a machine will be unnecessarily high. It is the object of the invention to come to a better construction and to obviate the above mentioned disadvantages. According to the invention this can be achieved when the implement is characterized in that the first rod is movable in its longitudinal direction, the first knives being coupled to said rod, said rod being in driving connection with the second knife by means of e flexible intermediate member. If such a solution, however, should be applied to a U-shaped cutter member with three knives the intermediate knife has to transmit the force necessary for the movement of the third knife. The second knife and especially the facing ends thereof with the connections to the intermediate member is subject to variable bending load; the transmitted forces are relatively great and the nature of the material of which the knives are made increases the risk of a fracture. Therefor the implement is according to the invention furthermore characterized in that the driving connection comprises an intermediate rod which is located along the second knife and which intermediate rod is in driving connection with that second knife, which intermediate rod is coupled to the first rod by the intermediate member.

For a better understanding of the invention and to show how the same may be carried into effect, reference will now be made, by way of example, to the accompanying drawings, in which:

Figure 1 is a perspective view which roughly shows the main parts of the implement which are a basis for the embodiments shown in the subsequent drawings;

Figure 2 is a horizontal view, taken in the direction of the arrow II in Figure 1 in accordance with a first embodiment;

Figure 3 is a plan view taken in the direction of the arrow III in Figure 2;

Figure 4 is a vertical cross-sectional view taken along the lines IV-IV in Figure 2.

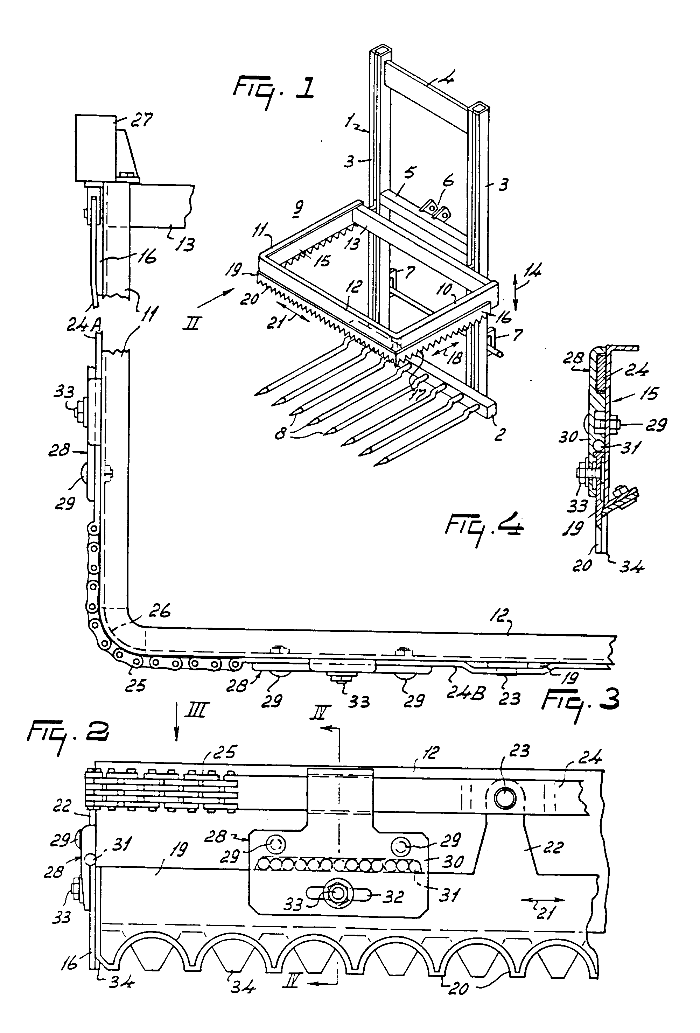

Figure 1 shows the main parts of an implement according to the invention, which form a basis for the embodiment shown in the drawings. The implement shown in Figure 1 comprises a frame 1 which, during operation, is in an approximately vertical position and is in the shape of a rectangular frame work which includes an approximately horizontal lower beam 2, to whose ends approximately vertical pillars 3 are rigidly connected. The upper ends of the pillars 3 are interconnected, likewise rigidly, by an upper beam 4 which is arranged parallel to the lower beam 2. The two pillars 3 are also rigidly interconnected by an intermediate beam 5 in a region located between the beams 2 and 4. Halfway its length, the beam 5 is provided with connection points 6 intended for coupling the implement to the upper lifting arm of a three-point lifting hitch of a tractor carrying and driving the said implement. Two spaced-apart connection points 7 are disposed on the pillars 3 near the lower beam 2; the connection points 7 serve to connect the implement to the lower arms of the afore-mentioned lifting hitch of the tractor.

At the side of the frame 1 facing away from the connection points 6 and 7, a plurality of mutually parallel teeth 8 are provided which are rigidly connected to the lower beam 2. The teeth 8 are all provided at the same distance from a horizontal plane and together constitute a carrier member for a silage block to be cut out. The ends of the teeth 8 facing away from the lower beam 2 are pointed.

The frame 1 furthermore carries a cutter member 9 which also extends parallel to a horizontal plane. The active part of the cutter member 9 comprises two interspaced, mutually parallel side portions 10 and 11, whose relative spacing approximately defines the working width of the cutter member 9. At the sides facing away from the frame 1, the side portions 10 and 11 are interconnected by an intermediate section 12. In a plan view, the side portions 10 and 11 and the intermediate section 12 basically constitute a carrier of the U-shaped cutter member 9. As is shown in Figure 1, the ends of the side portions 10 and 11 facing the frame 1 are interconnected by a connecting section 13, by means of which the cutter member 9 is fitted to the two pillars 3. The connecting section 13, and hence the entire cutter member 9, is drivably movable upwardly and downwardly in height along the two pillars 3 in the direction indicated by the arrows 14 in Figure 1. This drive in the direction of the arrow 14 is not shown in further detail, and is designed such, in a manner known per se, that the cutter member 9 can be moved with great force through the silage in the direction of the teeth 8 and can also be moved upwardly in the direction of the upper beam 4.

The side portions 10 and 11 and the intermediate section 12 comprise a rigid carrier 15 which, in a plan view, is in the shape of a U and is designed as one integral component part. At its side facing the frame 1, the carrier 15 is rigidly connected to the connecting section 13. In a plan view, the carrier 15 is of a width which is as narrow as possible in view of the driving forces required for its downward movement through the silage to be cut out.

At its outer and bottom side, respectively, each side portion 10 and 11 is provided with a plate-shaped steel knife 16 which, in a horizontal view, is of a substantially rectangular shape, whose main dimension extending in the horizontal direction is an order of magnitude greater than the vertical dimension. The horizontal upper edge and the relatively short vertical side edges of each knife 16 are rectilinear. The horizontal lower edge of each knife 16 is provided with downwardly pointing teeth 17. The two knives 16, which form part of the side portions 10 and 11, are drivable such, in a manner still further to be described, that they oscillate in a direction which is approximately parallel to a horizontal plane (arrows 18 in Figure 1).

At its outer side and its bottom side, the intermediate section 12 of the cutter member 9 is also provided with a plate-shaped knife 19, whose shape can be defined in a similar manner as in the foregoing for the knives 16; in general, however, the longitudinal dimension of the knife 19, which is directed parallel to the frame work of the frame 1, will be greater than that of the knives 16. The knife 19 is provided with downwardly directed teeth 20 and, in a manner still further to be described, also performs an oscillating movement which is approximately parallel to a horizontal plane, in the direction indicated by the arrows 21.

In the embodiment shown in Figures 2 to 4, both the knife 19 and each of the two knives 16 have at least two upwardly directed projections 22 which, for example, form one integral whole with the plate-shaped material of the knife and are also contiguous to the outer side of the carrier 15. Near its upper end located just below the upper side of the carrier 15, each projection 22 has an aperture through which a pin 23 is inserted. The end of the pin projecting ouwardly beyond the projection 22 is enclosed with a tight fit in an aperture in a drive rod 24, which extends parallel to the longitudinal direction of the relevant knife and parallel to and near the upper edge of the carrier 15 through a length which is only slightly less than the entire length of the relevant side portion 10, 11 or the intermediate section 12, respectively. The three drive rods 24 are of a rectangular cross-section, the largest dimension of which is directed parallel to the carrier 15.

The drive rods 24, which are loaded as tensile rods, are interconnected in the region of the corners between the side portions 10 and 11, respectively, and the intermediate section 12 by means of a flexible element 25 (in this embodiment a connecting element in the form of a chain) which curves about the relevant rounded corner and in the corner bears against a roller portion 26 which relative to the carrier 15 is bearing-supported about an approximately vertical shaft. Since the translational motion of the drive rods 24 and the chain 25 is of a limited size, e.g. slightly greater than the spacing between two consecutive knife teeth 17 and 20, respectively, the portion 26 supporting the flexible element 25 need not be given a shape corresponding to a complete roller but a part thereof will suffice to keep, seen in a plan view, the space enclosed by the inner boundary of the carrier 15 as free as possible for the passage of the silage to be cut out.

A horizontal hydraulic cylinder 27, whose piston rod is connected to the near end of the drive rod 24 extending along the relevant side portion, is mounted near each of the ends of the side portions 10 and 11 facing away from the intermediate section 12. The two hydraulic cylinders 27, performing drive means of the knives 16, 19, are controlled (in a manner not shown) by a control valve which is of such a construction that, when the piston rod of one of the cylinders 27 is withdrawn (and hence the pusher rods 24 coupled by the chains 25 and also the knives 16 and 19 connected thereto move along the carrier 15), the piston rod of the other cylinder 27 is allowed to extend through the same stroke. However, the hydraulic fluid moved by the piston moving outwardly from its cylinder is then discharged via a restriction, so that also in the drive rod 24 located near the latter piston rod a (slight) pre-tension remains ensured. Thus, it is rendered possible for each of the two flexible elements 25 to remain contiguous to the associated roller portions 26. Thereafter the piston rod of the last-mentioned cylinder is retracted, whereby the piston rod of the other cylinder moves outwardly, etc. The knives are then subjected to an oscillating movement relative to carrier 15.

The force required for the oscillating movement of the knives 16 and 19 along the carrier 15 can be reduced significantly by providing a bearing 28 which is shown in Figures 2 and 4. A plate-shaped housing 30 is bolted to the outer side of the carrier 15 by means of bolts 29. Taken in the vertical direction, the housing 30 extends, at least in this embodiment, from the upper edge of the carrier 15 to near the upper ends of the respective teeth 16 and 19. Considered from the upper edge of the carrier 15, the housing 30 is folded around the nearby drive rod 24 in such a manner that the rod 24 is free from the housing 30. Below the rod 24, the housing 30 is contiguous to the carrier 15, but in the region of the straight upper boundary of the knives 16 and 19, respectively, encloses a through-shaped concavity in which a row of hardened balls 31 is accommodated. At their upper sides, the balls bear against a bearing surface of the housing 30 and at their bottom sides against the straight upper edge of the corresponding knife 16, 19 respectively. Below the row of balls, the housing 30 is provided with a horizontal slotted aperture 32, the length of which is equal to or slightly larger than the stroke of the relevant knife caused by the cylinders 27. In the region of a slotted aperture 32 there is fitted (only) to the knife a pin 33 which projects outwardly through the slotted aperture and outside the housing 30 is provided with a widened portion which bears on the edges of the slotted aperture.

When the knife is moved to and fro by means of the projections 22, it is bearing-supported by the row of balls 31 in the housing 30 and hence on the carrier 15, so that the force to be produced by the two cylinders 27 can be reduced considerably, whilst the pin 33 prevents the possibility of the knife moving away from the carrier 15. Preferably, each one of the knives 16 and the knife 19 is provided with two or more balls-bearings 28.

As is apparent from Figures 2 and 4, the carrier 15 is extended downwardly by means of a counter-knife 34 provided with teeth having e.g. the same pitch as the teeth 17 and 20, respectively. During operation, the counter-knife is stationary relative to the carrier 15.

The embodiment shown in Figures 2 to 4 shows that it is possible to impart a synchronous, oscillating movement to the knives 16 and the knife 19, in which connection the drive force always originates from one of the free ends of the knives arranged in the shape of a U (cylinder 27). The drive force is transferred via the rods 24 and the flexible elements coupling the rods to the respective knives, bypassing said knives. In contradistinction to the implement defined in the opening paragraph, the knives themselves are not loaded by forces which are to be transferred to another knife, and the tips of the knives are not subjected continuously to bending forces. This renders a significantly longer service life of the construction possible.

**Claims**

1.  An implement for cutting fodder, such as silage, comprising a vertical frame (1) along which, at least predominantly horizontally extending, a cutter member (9) is movable in at least predominantly vertical direction, the cutter member (9) including a carrier (10, 11, 12) supporting two first knives (16) each extending rearwardly under an angle of about 90° with the plane defined by the vertical frame (1), and a second knife (19) extending under an angle of about 90° within a horizontal plane relative to said first knives (16), which first and second knives by means of driving means (27) are movable in their longitudinal direction relative to said carrier (10, 11, 12), whereby the drive of the second knife (19) is effected by-passing the first knives, the driving means comprising a first rod (24A), its longitudinal direction extending at least predominantly parallel to the longitudinal direction of said first knives (16), said rod (24A) being coupled to the second knife (19), characterized in that the first rod (24A) is movable in its longitudinal direction, the first knives (16) being coupled to said rod (24A), said rod (24A) being in driving connection with the second knife (19) by means of a flexible intermediate member (25).

2.  An implement as claimed in claim 1, characterized in that the driving connection comprises an intermediate rod (24B) which is located along the second knife (19) and which intermediate rod (24B) is in driving connection with the second knife (19), which intermediate rod (24B) is coupled to the first rod (24A) by the intermediate member (25).

**Patentansprüche**

1.  Gerät zum Schneiden von Futter, zum Beispiel Silage, mit einem vertikalen Rahmen (1), an dem entlang, mindestens überwiegend horizontal ausgerichtet, ein Schneidglied (9) in mindestens überwiegend vertikaler Richtung bewegbar ist; das Schneidglied (9) weist einen Träger (10, 11, 12) auf, der zwei erste Messer (16), die jeweils im Winkel von etwa 90° zu der von dem vertikalen Rahmen (1) definierten Ebene nach hinten gerichtet sind, sowie ein zweites Messer (19) trägt, das im Winkel von etwa 90° zu den ersten Messern (16) in einer horizontalen Ebene ausgerichtet ist; die ersten Messer und das zweite Messer sind mittels eines Antriebsaggregates (27) relativ zu dem Träger (10, 11, 12) in ihrer Längsrichtung bewegbar, wobei der Antrieb des zweiten Messers (19) in Umgehung der ersten Messer ausgeführt wird; das Antriebsaggregat enthält eine erste Stange (24A), deren Längsrichtung mindestens überwiegend parallel zur Längsrichtung der ersten Messer (16) verläuft und die mit dem zweiten Messer (19) verbunden ist, dadurch gekennzeichnet, daß die erste Stange (24A) in ihrer Längsrichtung bewegbar ist, daß die ersten Messer (16) mit der Stange (24A) verbunden sind, und daß die Stange (24A) mit dem zweiten Messer (19) mittels eines flexiblen Zwischengliedes (25) in Antriebsverbindung steht.

2. Gerät nach Anspruch 1,
dadurch gekennzeichnet, daß die Antriebsverbindung eine Zwischenstange (24B) enthält, die längs des zweiten Messers (19) angeordnet ist und mit dem zweiten Messer (19) in Antriebsverbindung steht, und daß die Zwischenstange (24B) mit der ersten Stange (24A) über das Zwischenglied (25) verbunden ist.

**Revendications**

1. Machine pour découper du fourrage, tel que de l'ensilage, comprenant un châssis vertical (1) le long duquel un organe de coupe (9) s'étendant au moins principalement horizontalement est mobile dans une direction principalement verticale, l'organe de coupe (9) comportant un support (10, 11, 12) portant deux premiers couteaux (16) s'étendant chacun vers l'arrière sous un angle d'environ 90° par rapport au plan défini par le châssis vertical (1), et un deuxième couteau (19) s'étendant sous un angle d'environ 90° par rapport auxdits premiers couteaux (16), lesquels premiers et deuxième couteaux sont mobiles dans leur sens longitudinal au moyen de moyens d'entraînement (27) par rapport audit support (10, 11, 12), tandis que l'entraînement du deuxième couteau (19) est effectué en contournant les premiers couteaux, les moyens d'entraînement comprenant une première tige (24A) dont le sens longitudinal s'étend principalement parallèlement au sens longitudinal desdits premiers couteaux (16), ladite tige (24A) étant reliée au deuxième couteau (19),
**caractérisée** en ce que la première tige (24A) est mobile dans son sens longitudinal, les premiers couteaux (16) étant reliés à ladite tige (24A), ladite tige (24A) étant en liaison d'entraînement avec le deuxième couteau (19) au moyen d'un organe intermédiaire flexible (25).

2. Machine selon la revendication 1, caractérisée en ce que la liaison d'entraînement comprend une tige intermédiaire (24B) qui est située le long du deuxième couteau (19) et laquelle tige intermédiaire (24B) est en liaison d'entraînement avec le deuxième couteau (19), laquelle tige intermédiaire (24B) est reliée à la première tige (24A) par l'organe intermédiaire (25).

FIG. 1

FIG. 4

FIG. 3

FIG. 2